Europäisches Patentamt

**European Patent Office**

**Office européen des brevets**

(11) Numéro de publication: **0 282 389 B1**

## (12) FASCICULE DE BREVET EUROPEEN

(45) Date de publication de fascicule du brevet: **15.07.92**  (51) Int. Cl.⁵: **H02G 11/00**, B60J 5/04, B60R 16/02

(21) Numéro de dépôt: **88400439.1**

(22) Date de dépôt: **25.02.88**

(54) **Dispositif de liaison électrique entre deux faisceaux de fils conducteurs et véhicule automobile équipé de ce dispositif.**

(30) Priorité: **05.03.87 FR 8703007**

(43) Date de publication de la demande:
**14.09.88 Bulletin 88/37**

(45) Mention de la délivrance du brevet:
**15.07.92 Bulletin 92/29**

(84) Etats contractants désignés:
**DE GB IT**

(56) Documents cités:
**DE-C- 354 858**
**DE-C- 3 500 359**
**FR-A- 1 408 343**
**FR-A- 2 455 379**
**US-A- 3 433 889**

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **L'inventeur a renoncé àsa désignation**

(74) Mandataire: **Durand, Yves Armand Louis et al Cabinet Z. Weinstein 20, Avenue de Friedland**
**F-75008 Paris(FR)**

EP 0 282 389 B1

Rank Xerox (UK) Business Services

## Description

La présente invention se rapporte à un dispositif de liaison électrique entre deux faisceaux de fils électriquement conducteurs portés respectivement par une pièce fixe et par une pièce mobile.

Elle vise également un véhicule automobile équipé de ce dispositif.

Un dispositif connu est par exemple divulgué dans le brevet FR-A-1 408 343 et concerne un dévidoir prolongateur de fils électriques de présentant comme un boitier dans lequel un faisceau de fils conducteurs est enroulé entre un moufle fixe et un moufle mobile tendu par un ressort. Ces moufles constituent un système de palan permettant une démultiplication qui permet par traction de sortir la longueur de fils électriques désirée.

On a déjà utilisé, notamment dans le secteur automobile, des systèmes de liaison électrique permettant de raccorder des fils conducteurs portés par une pièce fixe à des fils conducteurs portés par une pièce mobile.

Ces systèmes de liaison électrique étaient généralement constitués par un petit nombre de fils fins et torsadés, étant entendu qu'aux deux extrémités de l'ensemble des fils est prévu un connecteur pour le raccordement.

Toutefois, ces systèmes étaient pas ou peu extensibles et, en tout cas, ne procuraient pas une réserve de longueur de fil assez importante pour éviter les ruptures et s'adapter correctement à un angle de débattement qui peut être important, entre la pièce fixe et la pièce mobile.

La présente invention a donc pour but de remédier à ces inconvénients en proposant un dispositif de liaison électrique qui est d'une conception particulièrement simple et fiable, et qui peut servir au raccordement de faisceaux possèdant un nombre de fils conducteurs très important, et cela entre deux éléments ayant des déplacements relatifs importants.

A cet effet, l'invention a pour objet un dispositif de liaison électrique entre deux faisceaux de fils conducteurs, portés respectivement par une pièce fixe et par une pièce mobile, du type comprenant un faisceau de fils conducteurs souples qui est muni à ses extrémités de connecteurs et qui est solidaire d'un support sur lequel est fixé l'un des connecteurs ou premier connecteur, tandis que l'autre ou deuxième connecteur est retenu extérieurement et élastiquement contre une paroi du support que traverse le faisceau, par un ressort fixé par une extrémité ou première extrémité sur ledit support, caractérisé en ce que l'autre ou deuxième extrémité du ressort est attachée au faisceau par une boucle de façon que ledit faisceau forme par rapport audit support une réserve de longueur de fils conducteurs en formant des méandres en forme de S comportant un brin tendu et de longueur réglable et un brin non tendu.

Le faisceau de raccordement, de préférence constitué d'une nappe de fils conducteurs, formera sur le support, grâce au moyen de rappel, des méandres constituant une réserve de longueur importante et susceptible de s'adapter parfaitement à une importante variation de distance ou à un angle de pivotement important entre la pièce fixe et la pièce mobile.

Suivant une autre caractéristique de l'invention, le connecteur élastiquement retenu sur le support est maintenu contre une paroi du support que traverse le faisceau de raccordement.

Selon encore une autre caractéristique de l'invention, le moyen de rappel précité est attaché au faisceau de raccordement par l'intermédiaire d'une boucle ou analogue immobilisée sur le faisceau.

On précisera ici que le moyende rappel est un ressort fixé sur le support ou relié à un autre faisceau de raccordement.

Suivant un mode de réalisation préféré, le support précité est constitué par un élément allongé en forme de boîtier à l'une des extrémités duquel est fixé l'un des connecteurs et l'une des extrémités du ressort, et à l'autre extrémité duquel est située la paroi précitée qui est munie d'une fente permettant le coulissement du faisceau de raccordement et sur laquelle paroi vient buter l'autre connecteur sous l'action du ressort.

Le dispositif de l'invention peut être utilisé pour le raccordement de deux faisceaux de fils conducteurs portés respectivement par la porte d'un véhicule automobile et par la planche de bord de ce véhicule.

Bien entendu, l'invention vise aussi un véhicule automobile équipé d'un dispositif répondant aux caractéristiques ci-dessus.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue schématique et en perspective du dispositif conforme à l'invention ;

La figure 2 est une vue en perspective partielle d'une extrémité du dispositif de la figure 1, suivant un autre mode de réalisation ;

La figure 3 est une vue de dessus et en coupe horizontale d'une partie de la structure avant d'un véhicule et des portes de ce véhicule, et montrant comment le dispositif de l'invention peut être utilisé ; et

La figure 4 est une vue analogue à la figure 3, mais montrant un autre mode d'utilisation du dispositif selon cette invention.

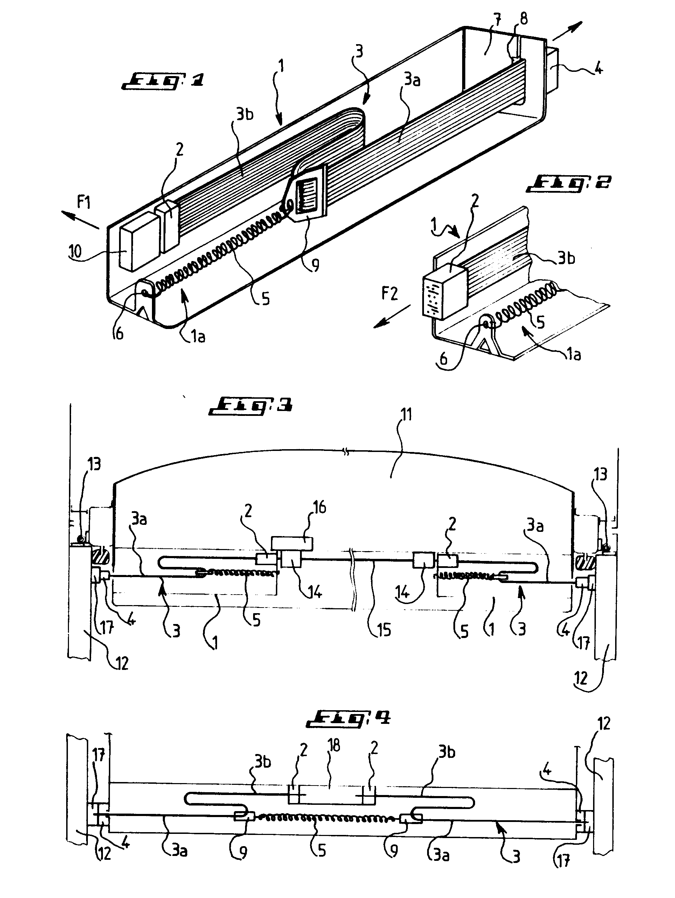

Suivant un exemple de réalisation, et en se reportant notamment à la figure 1, on voit qu'un dispositif de liaison électrique conforme aux principes de l'invention comprend essentiellement un support 1 présentant sensiblement la forme d'un boîtier allongé qui contient un faisceau en nappe 3 de fils électriquement conducteurs, l'une des extrémités de ce faisceau étant pourvue d'un connecteur 2 fixé sur le support 1, et l'autre extrémité de ce faisceau étant également pourvue d'un connecteur 4 élastiquement retenu sur le support ou boîtier 1 par un moyen de rappel 5 permettant de constituer une réserve de longueur de fils conducteurs sur ou dans le support 1.

Le moyen de rappel 5 est par exemple constitué par un ressort fixé en 6, comme le connecteur 2, sur l'une 1a des extrémités du support 1, tandis que l'autre extrémité de ce support comporte une paroi ou embout 7 muni d'une fente 8 traversée par la nappe 3 de fils conducteurs, qui porte à son extrémité le connecteur 4.

Ainsi, le connecteur 4 prend élastiquement appui contre la face extérieure de la paroi 7 grâce au ressort 5 qui réalise, à l'intérieur du boîtier 1, une réserve de longueur de fils conducteurs, puisque la nappe 3 forme des méandres en forme de S comportant un brin tendu 3a et un brin non tendu 3b.

Le raccordement du ressort 5 au faisceau de fils conducteurs 3 est réalisé avantageusement à l'aide d'une boucle 9 immobilisée par frottement sur la nappe 3. Ainsi, on peut régler la longueur du brin 3a en fonction de l'utilisation du support 1 qui est destiné à raccorder, par l'intermédiaire des connecteurs 2 et 4, un faisceau de fils conducteurs porté par une pièce fixe et un faisceau de fils conducteurs porté par une pièce mobile, comme on l'expliquera ultérieurement.

On a montré en 10 sur la figure 1 un connecteur intermédiaire solidaire du support 1 et enfichable, suivant la direction de la flèche F$_1$ dans un connecteur (non représenté), appartenant à une pièce fixe.

Suivant la réalisation visible sur la figure 2, le connecteur 2 est solidaire de l'extrémité 1a du support 1 de telle façon qu'il puisse être directement enfichable dans un connecteur (non représenté sur la figure 2) appartenant à une pièce fixe, et cela suivant la direction de la flèche F$_2$.

On remarquera ici que la paroi d'extrémité 7 du boîtier ou support 1 réalisé par exemple en matière plastique, peut être conformée de toute manière appropriée de façon à pouvoir s'accrocher, de toute manière usuelle, dans un élément de la structure du véhicule, étant entendu que le connecteur 4 sera raccordé à un connecteur fixé sur par exemple une pièce mobile, telle que la porte d'un véhicule.

Mais on se reportera maintenant aux figures 3 et 4 qui illustrent des applications du dispositif selon la présente invention.

On voit sur la figure 3 la planche de bord 11 d'un véhicule, ainsi que les portes latérales avant 12 de ce véhicule, lesquelles portes sont bien entendu articulées sur des axes 13. On prévoit ici deux supports ou boîtiers tels que 1 assurant la liaison électrique entre la planche de bord 11 et les portes 12.

Les connecteurs 2 solidaires de chaque boîtier 1 sont enfichés respectivement dans un connecteur 14, les deux connecteurs 14 étant reliés par une filerie 15 et l'un de ces connecteurs étant enfiché dans un connecteur 16 solidaire de la planche de bord 11.

Les connecteurs 4 à l'extrémité du brin 3a extensible sont enfichés chacun dans un connecteur 17 solidaire des portes 12. Ainsi, on comprend que, lors de l'ouverture des portes, le faisceau ou nappe 3 de fils conducteurs dans le boîtier 1 s'allongera comme expliqué précédemment.

Il est à noter ici que, sans sortir du cadre de l'invention, on pourrait adopter une position inverse, c'est-à-dire que le boîtier 1 serait fixé sur les portes 12, le connecteur 4 étant alors électriquement relié à la planche de bord, et le connecteur 2 étant relié au faisceau de fils conducteurs de la porte.

Suivant la réalisation visible sur la figure 4, on prévoit, comme précédemment, deux faisceaux ou nappes 3 respectivement associés aux deux portes 12, mais ici, le ressort 5 de rappel du connecteur 4 est un ressort unique reliant les deux faisceaux ou nappes 3 de fils conducteurs. Les connecteurs 2 sont ici enfichés sur un même connecteur multiple 18 fixé sur par exemple la planche de bord du véhicule.

On a donc réalisé suivant l'invention un dispositif de liaison électrique à faisceau ou nappe de fils conducteurs dont l'un des brins, sollicité par un moyen de rappel, pourra s'allonger d'une façon adéquate de façon à s'adapter parfaitement à la distance ou l'angle entre une pièce fixe et une pièce mobile, ce dispositif étant d'une conception mécanique simple, fiable et peu coûteuse.

Bien entendu, l'invention n'est nullement limitée aux modes de réalisation décrits et illustrés qui n'ont été donnés qu'à titre d'exemple.

C'est ainsi que le mode de fixation du ressort au faisceau de raccordement dans le support ou boîtier 1 peut être quelconque. De même, le support ou boîtier 1 peut assurer le raccordement électrique entre deux éléments quelconques, tels que par exemple des panneaux coulissants.

**Revendications**

1. Dispositif de liaison électrique entre deux faisceaux de fils conducteurs, portés respectivement par une pièce fixe et par une pièce mobile, du type comprenant un faisceau (3) de fils conducteurs souples qui est muni à ses extrémités de connecteurs (2,4) et qui est solidaire d'un support (1) sur lequel est fixé l'un des connecteurs ou premier connecteur (2), tandis que l'autre ou deuxième connecteur (4) est retenu extérieurement et élastiquement contre une paroi (7) du support (1) que traverse le faisceau (3), par un ressort (5) fixé par une extrémité ou première extrémité (6) sur ledit support, caractérisé en ce que l'autre ou deuxième extrémité du ressort (5) est attachée au faisceau (3) par une boucle (9) de façon que ledit faisceau forme par rapport audit support (1) une réserve de longueur de fils conducteurs en formant des méandres en forme de S comportant un brin tendu et de longueur réglable (3a) et un brin non tendu (3b).

2. Dispositif selon la revendication 1, caractérisé en ce que la première extrémité (6) du ressort (5), au lieu d'être fixée sur le support (1), est reliée à un autre faisceau (3) de fils conducteurs souples.

3. Dispositif selon la revendication 1 ou 2, caractérisé en ce que la pièce mobile précitée est constituée par la porte (12) d'un véhicule automobile, tandis que la pièce fixe est constituée par la planche de bord (11) de ce véhicule.

## Claims

1. Device for the electrical connection of two bundles of conductive wires carried by a stationary part and by a movable part, respectively, of the type comprising a bundle (3) of flexible conductive wires which is provided at its ends with connectors (2,4) and which is made fast to a support (1) onto which is fastened one of the connectors or first connector (2) whereas the other or second connector (4) is retained externally and elastiscally against a wall (7) of the support (1) through which the bundle (3) extends, by a spring (5) fastened with one end or first end (6) to the said support, characterized in that the other or second end of the spring (5) is attached to the bundle (3) by a loop (9) so that the said bundle forms with respect to the said support (1) a supply of length of conductive wires by forming S-shaped meanders comprising a stretched leg of adjustable length (3a) and a non-stretched leg (3b).

2. Device according to claim 1, characterized in that the first end (6) of the spring (5) instead of being fastened onto the support (1) is connected to another bundle (3) of flexible conductive wires.

3. Device according to claim 1 or 2, characterized in that the aforesaid movable part is constituted by the door (12) of an automotive vehicle whereas the stationary part is constituted by the dashboard (11) of this vehicle.

## Patentansprüche

1. Vorrichtung zur elektrischen Verbindung zwischen zwei jeweils durch ein ortsfestes und durch ein bewegliches Stück getragenen Bündeln von leitenden Drähten, derjenigen Gattung, die ein Bündel (3) von biegsamen leitenden Drähten umfasst, das an seinen Enden mit Verbindern (2,4) versehen ist und das mit einer Halterung (1) fest verbunden ist, an welcher einer der Verbinder bzw. der erste Verbinder (2) befestigt ist, während der andere bzw. zweite Verbinder (4) aussen und elastisch an einer Wandung (7) der Halterung (1), welche das Bündel (3) durchsetzt, durch eine, mit einem Ende bzw. ersten Ende (6) an der besagten Halterung befestigten Feder (5) zurückgehalten wird, dadurch gekennzeichnet, dass das andere bzw. zweite Ende der Feder (5) an dem Bündel (3) durch eine Schleife (9) derart angebracht ist, dass das besagte Bündel in Bezug auf die besagte Halterung (1) einen Längenvorrat von leitenden Drähten bildet, indem es S-förmige einen straffen Schenkel einstellbarer Länge (3a) und einen nicht straffen Schenkel (3b) aufweisende Schlingen bildet.

2. Vorrichtung nach Anspruch 1, dadurch gekennzeichnet, dass das erste Ende (6) der Feder (5), anstatt an der Halterung (1) befestigt zu sein, mit einem anderen Bündel (3) biegsamer leitender Drähten verbunden ist.

3. Vorrichtung nach Anspruch 1 oder 2, dadurch gekennzeichnet, dass das vorgenannte bewegliche Stück durch die Tür (12) eines Kraftfahrzeugs gebildet wird, während das ortsfeste Stück durch das Schaltbrett (11) dieses Fahrzeugs gebildet wird.

_Fig. 1_

_Fig. 2_

_Fig. 3_

_Fig. 4_